# EUROPÄISCHE PATENTSCHRIFT

(11) **EP 2 108 583 B1**
(45) Veröffentlichungstag und Bekanntmachung des Hinweises auf die Patenterteilung: **20.07.2011**
(21) Anmeldenummer: 09004650.9
(22) Anmeldetag: 31.03.2009
(51) Int. Cl.: B63H 23/08, F16H 3/14

(54) **Schiffsgetriebe mit Drehrichtungswechsel**
Ship gear with reversing drive
Boîte de vitesse à changement du sens de rotation pour bateau

(30) Priorität: 10.04.2008 DE 102008018703
(43) Veröffentlichungstag der Anmeldung: 14.10.2009
(73) Patentinhaber: Reintjes GmbH, 31785 Hameln (DE)
(72) Erfinder: Schmidt, Manfred, 32683 Barntrup (DE); Eschert, Christian, 31691 Helpsen (DE); Otto, Steffen, Dr., 37619 Bodenwerder (DE)
(74) Vertreter: Plöger, Jan Manfred

(56) Entgegenhaltungen:
- EP-A- 1 557 587
- US-A- 1 970 652
- US-A- 5 580 289

## Beschreibung

Die Erfindung betrifft ein Schiffsgetriebe, beispielsweise für eine Yacht.

Aus der EP 1464 574 A2 ist ein kurz bauendes Schiffsgetriebe bekannt. Derartige Schiffsgetriebe werden beispielsweise dazu verwendet, um in Yachten das Drehmoment eines Motors auf einen Pod-Antrieb zu übertragen. Damit die Antriebseinheit aus Motor und Getriebe möglichst wenig Platz beansprucht, werden kurz bauende Getriebe verwendet. Nachteilig an dem bekannten Schiffsgetriebe ist, dass es noch immer relativ lang baut. Ein weiterer Nachteil ist, dass sich das Getriebe nicht als Plattform eignet, das heißt, dass für jede Untersetzung einer Motordrehzahl auf eine Propellerdrehzahl aufwendig ein neues Getriebe konstruiert werden muss.

Aus der US 2008/0026652 A1 ist ein Schiffsgetriebe bekannt, mit dem die Drehzahl des Motors erhöht werden kann, wenn sich das Boot, in dem das Getriebe eingebaut ist, in schneller Fahrt befindet. Nachteilig an einem derartigen Getriebe ist, dass es wenig kompakt ist.

Aus der DE 30 15 473 C2 ist ein Heckantrieb für Boote bekannt, der besonders kompakt werden kann. Nachteilig hieran ist, dass wegen der großen Anzahl an schräg verzahnten Zahnrädern ein erhöhter Produktionsaufwand betrieben werden muss.

Aus der US 200710180941 A1 ist ein Schiffsgetriebe bekannt, dass zwei Geschwindigkeiten erlaubt. Nachteilig ist auch hier, dass mehrere Kegelräder vorgesehen werden müssen, was den Produktionsaufwand erhöht.

Aus der US 5,580,289 ist ein Schiffsgetriebe bekannt, bei dem Lamellenkupplungen verwendet werden, um die Zahnräder mit zugeordneten Wellen zu verwenden.

Aus der EP 1 557 587 A2 ist ein Triebwagen-Achsgetriebe bekannt, bei dem eine Schiebemuffe verwendet wird, um zwischen einem Vorwärtsgang umzuschalten. Nachteilig hieran ist, dass ein Umschalten das Stillstehen des Fahrzeugs voraussetzt, was bei Schiffen nicht immer gegeben ist.

Der Erfindung liegt die Aufgabe zugrunde, ein Schiffsgetriebe anzugeben, das besonders kurz baut und für Pod-Antriebe geeignet ist.

Die Erfindung löst das Problem durch ein Schiffsgetriebe gemäß Anspruch 1.

Vorteilhaft an diesem Schiffsgetriebe ist, dass es leicht für eine anderen Untersetzung umkonstruiert werden kann. Dazu müssen lediglich die Durchmesser von erstem Ritzel und zweitem Ritzel einerseits und Stirnrad andererseits geändert werden.

Vorteilhaft ist zudem die leichte Einstellung des Kegeltriebs, da gegenüber dem Stand der Technik nur eine Paarung aus Kegelritzel und Tellerrad relativ zueinander justiert werden muss.

Es ist ein weiterer Vorteil, dass das erfindungsgemäße Schiffsgetriebe besonders kompakt baut. Dadurch verbleibt viel Nutzraum, wenn das Schiffsgetriebe beispielsweise in einer Yacht eingebaut ist.

Vorteilhafterweise lässt sich das Schiffsgetriebe zudem leicht warten. Der horizontale Achsversatz des Schiffsgetriebes kann zudem im Rahmen einer Umkonstruktion leicht variiert werden, so dass das Schiffsgetriebe mit geringem Aufwand an das jeweilige Design des Schiffs, beispielsweise der Yacht, angepasst werden kann.

Vorteilhaft ist zudem, dass das Schiffsgetriebe besonders leicht baut. Die zweite Ritzelwelle kann nämlich besonders leicht ausgelegt werden. Das liegt daran, dass beim Einsatz des Schiffsgetriebes in einer Yacht bei Rückwärtsfahrt nur ein geringes Antriebsmoment übertragen werden muss. Während also die Antriebswelle und die erste Ritzelwelle für die Übertragung des für schnelle Vorwärtsfahrt notwendigen Drehmoments ausgebildet werden müssen, kann die zweite Ritzelwelle leichtgewichtig hergestellt werden.

Das erfindungsgemäße Schiffsgetriebe hat des Weiteren den Vorteil einer hohen Übersetzungsvariabilität bei gleichem Bauraum. In anderen Worten kann das Übersetzungsverhältnis leicht geändert werden, indem einzelne Ritzel in ihrem Durchmesser verändert werden. Vorteilhaft ist zudem die einfache Möglichkeit, einen Hybrid-Antrieb aufzubauen. Beispielsweise kann die Antriebswelle mit einem Dieselmotor verbunden werden und an einen Drehmomenteinleitzapfen wird ein Elektromotor angekoppelt. So ist ein geräusch- und emissionsarmer Betrieb möglich.

Die Antriebswelle weist gemäß einer bevorzugten Ausführungsform einen Wellenstutzen zum Verbinden mit einem Motor auf, wobei das Tellerrad bezüglich einer Ebene durch das erste Ritzel, das zweite Ritzel und das Stirnrad auf der gleichen Seite angeordnet ist wie der Wellenstutzen. Auf diese Weise kann der Abstand zwischen dem Motor einerseits und einer Schiffsschraube, die abtriebsseitig zum Getriebe angeordnet ist, andererseits besonders klein gehalten werden. Gerade bei Yachten ist es oft gewünscht, dass die Schiffsschraube aus Sicherheitsgründen einen gewissen Abstand zum Heck hat. Bei herkömmlichen Getrieben führt das zu einem Verlust an Nutzraum der Yacht.

Es ist bevorzugt, dass das Schiffsgetriebe so ausgebildet ist, dass das erste und das zweite Ritzel stets jeweils mit dem Stirnrad kämmen und dass das Antriebswellenzahnrad stets mit dem Ritzelwellenzahnrad kämmt. Zudem kämmen Kegelritzel und Tellerrad stets miteinander.

Bevorzugt ist auf der Antriebswelle eine schaltbare Antriebswellenkupplung angeordnet, mittels der das Antriebswellenzahnrad drehfest mit der ersten Ritzelwelle verbindbar ist. Bevorzugt ist zudem auf der zweiten Ritzelwelle eine schaltbare Ritzelwellenkupplung angeordnet, mittels der das Ritzelwellenzahnrad drehfest mit der zweiten Ritzelwelle verbindbar ist. Durch die Antriebswellenkupplung und die Ritzelwellenkupplung kann eine Drehrichtungsumkehr der Abtriebswelle erreicht werden.

Bevorzugt ist die schaltbare Antriebswellenkupplung als hydraulisch schaltbarer Lamellenkupplung ausgebildet. Derartige Lammellenkupplungen sind für die Übertragung großer Drehmomente bzw. großer Leistungen besonders gut geeignet.

Eine besonders kompakte Bauform ergibt sich, wenn das Antriebswellenzahnrad als außenverzahntes Gehäuse der Lamellenkupplung ausgebildet ist. In anderen Worten umgibt bevorzugt das Antriebswellenzahnrad die Antriebswellenkupplung radial vollständig. Günstig ist es, wenn das Gehäuse die Lamellenkupplung axial zumindest teilweise umgibt. Das heißt, dass eine Projektion des Antriebswellenzahnrads auf die Antriebswelle sich zumindest teilweise mit der Projektion der Lamellenkupplung auf die Antriebswelle deckt. Bevorzugt umgibt das Antriebswellenzahnrad die Antriebswellenkupplung axial vollständig, so dass die Projektion des Antriebswellenzahnrads auf die Antriebswelle die Projektion der Lamellenkupplung auf die Antriebswelle einschließt.

Gemäß einer bevorzugten Ausführungsform ist auch die schaltbare Ritzelwellenkupplung eine hydraulisch schaltbare Lamellenkupplung. Günstig ist zudem, wenn das Ritzelwellenzahnrad als außen verzahntes Gehäuse der Ritzelwellenkupplung ausgebildet ist. In anderen Worten umgibt das Ritzelwellenzahnrad die Ritzelwellenkupplung radial vollständig und zumindest teilweise axial, insbesondere axial vollständig. Auch hier ergibt sich ein besonders kompaktes Schiffsgetriebe.

Es ist bevorzugt, dass das Schiffsgetriebe so ausgebildet ist, dass das erste und das zweite Ritzel stets jeweils mit dem Stirnrad kämmen und dass das Antriebswellenzahnrad stets mit dem Ritzelwellenzahnrad kämmt. Zudem kämmen Kegelritzel und Tellerrad stets miteinander.

Bevorzugt ist auf der Antriebswelle eine schaltbare Antriebswellenkupplung angeordnet, mittels der das Antriebswellenzahnrad drehfest mit der ersten Ritzelwelle verbindbar ist. Bevorzugt ist zudem auf der zweiten Ritzelwelle eine schaltbare Ritzelwellenkupplung angeordnet, mittels der das Ritzelwellenzahnrad drehfest mit der zweiten Ritzelwelle verbindbar ist. Durch die Antriebswellenkupplung und die Ritzelwellenkupplung kann eine Drehrichtungsumkehr der Abtriebswelle erreicht werden.

Bevorzugt ist die schaltbare Antriebswellenkupplung als hydraulisch schaltbarer Lamellenkupplung ausgebildet. Derartige Lammellenkupplungen sind für die Übertragung großer Drehmomente bzw. großer Leistungen besonders gut geeignet.

Eine besonders kompakte Bauform ergibt sich, wenn das Antriebswellenzahnrad als außenverzahntes Gehäuse der Lamellenkupplung ausgebildet ist. In anderen Worten umgibt bevorzugt das Antriebswellenzahnrad die Antriebswellenkupplung radial vollständig. Günstig ist es, wenn das Gehäuse die Lamellenkupplung axial zumindest teilweise umgibt. Das heißt, dass eine Projektion des Antriebswellenzahnrads auf die Antriebswelle sich zumindest teilweise mit der Projektion der Lamellenkupplung auf die Antriebswelle deckt. Bevorzugt umgibt das Antriebswellenzahnrad die Antriebswellenkupplung axial vollständig, so dass die Projektion des Antriebswellenzahnrads auf die Antriebswelle die Projektion der Lamellenkupplung auf die Antriebswelle einschließt.

Gemäß einer bevorzugten Ausführungsform ist auch die schaltbare Ritzelwellenkupplung eine hydraulisch schaltbare Lamellenkupplung. Günstig ist zudem, wenn das Ritzelwellenzahnrad als außen verzahntes Gehäuse der Ritzetwellenkupplung ausgebildet ist. In anderen Worten umgibt das Ritzelwellenzahnrad die Ritzelwellenkupplung radial vollständig und zumindest teilweise axial, insbesondere axial vollständig. Auch hier ergibt sich ein besonders kompaktes Schiffsgetriebe.

Zum Schalten der Antriebswellenkupplung und der Ritzelwellenkupplung ist bevorzugt eine elektrische Ansteuereinheit vorgesehen, die ausgebildet ist, um die Antriebswellenkupplung und die Ritzelwellenkupplung so zu schalten, dass stets höchstens eine der beiden Kupplungen eine drehfeste Verbindung mit der jeweiligen Welle herstellt, Auf diese Weise dreht die Abtriebswelle entweder in eine Antriebsrichtung, entgegen der Antriebsrichtung oder gar nicht.

In einer bevorzugten Ausführungsform besitzt das Schiffsgetriebe einen Drehmomentabzweigzapfen zum Abgreifen eines Drehmomentes an einer von der Abtriebswelle verschiedenen Stelle. Ein derartiger Abzweigzapfen ist auch als PTO (Power Take Off, englisch für Leistungsabzweigung) bekannt. Das erfindungsgemäße Schiffsgetriebe eignet sich besonders gut für das Vorsehen eines Drehmomentabzweigzapfens, da drei Wellen zur Verfügung stehen, an denen diese Abzweigzapfen angebracht werden können. Es ist außerdem möglich, eine weitere Welle vorzusehen, an der der Drehmomentabzweigzapfen vorgesehen ist,

In der bevorzugten Ausführungsform umfasst das Schiffsgetriebe zudem einen Drehmomenteinleitzapfen zum Einleiten eines Antriebsdrehmomentes. Ein derartiger Drehmomenteinleitzapfen ist auch als PTI (Power Take In, englisch für Leistungseinleitung) bekannt. Wird ein derartiges Antriebsdrehmoment von einem anderen Aggregat als dem Motor, der die Antriebswelle antreibt, eingeleitet, so sind die Antriebswellenkupplung und die Ritzelwellenkupplung gelöst. Existiert eine elektrische Ansteuereinheit, so ist diese eingerichtet, um die beiden Kupplungen in eine Lösestellung zu bringen, wenn das externe Antriebsdrehmoment eingeleitet werden soll.

Besonders bevorzugt ist das Schiffsgetriebe so ausgebildet, dass die Antriebswellenachse in Einbaulage des Schiffsgetriebes im Wesentlichen horizontal verläuft. Unter dem Merkmal, dass die Antriebswellenachse im Wesentlichen horizontal verläuft, ist insbesondere zu verstehen, dass es möglich, nicht aber notwendig ist, dass die Antriebswellenachse im strengen mathematischen bzw. physikalischen Sinne horizontal verläuft. Kleinere Abweichungen von der horizontalen Lage, beispielsweise um weniger als 10°, insbesondere weniger als 5°, können toleriert werden. Vorteilhaft hieran ist, dass in diesem Fall hydraulisch schaltbare Lamellenkupplungen besonders betriebssicher betrieben werden können.

Besonders vorteilhaft ist, wenn das Schiffsgetriebe ausgelegt ist zum Übertragen einer mechanischen Leistung von mehr als 430 kW, insbesondere von mehr als 1300 kW. Derartige Schiffsgetriebe sind ausgebildet, um fest mit einem Schiff, insbesondere einer Yacht, verbunden zu werden und sind beispielsweise keine Außenbordmotoren.

Im Folgenden wird die Erfindung anhand eines exemplarischen AusführungsbeiSpiels näher erläutert. Dabei zeigt
- Figur 1a: eine perspektivische Ansicht eines erfindungsgemäßen Schiffsgetrie- bes, bei dem das Gehäuse weggebrochen ist,
- Figur 1b: das Schiffsgetriebe gemäß Figur 1a in einer weiteren Darstellung,
- Figur 2: eine Ansicht auf eine Stirnseite des Schiffsgetriebes gemäß Figur 1,
- Figur 3: einen Schnitt durch das Schiffsgetriebe entlang der Linie F-F gemäß Figur 2 und
- Figur 4: einen Schnitt durch das Schiffsgetriebe entlang der Linie G-G gemäß Figur 2.

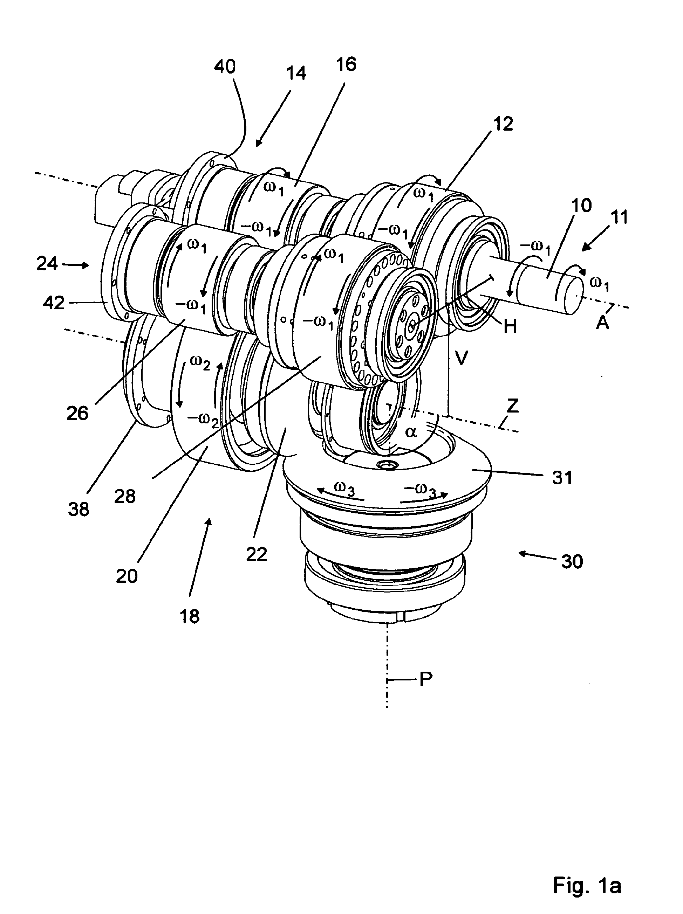

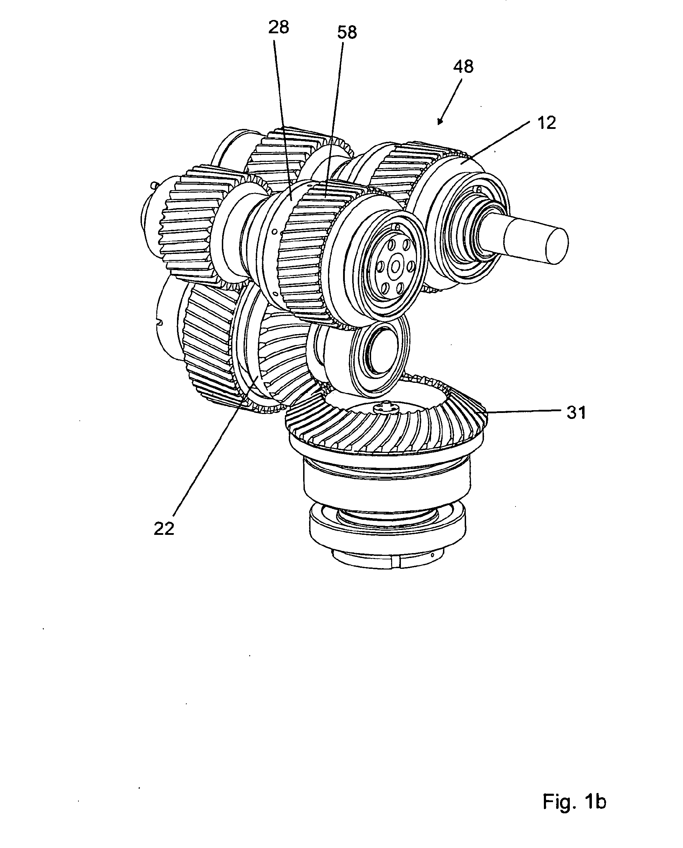

Figur 1a zeigt ein Schiffsgetriebe mit einer Antriebswelle 10, die ausgebildet ist, um mit einem nicht eingezeichneten Motor verbunden zu werden. Die Antriebswelle 10 erstreckt sich entlang einer Antriebswellenachse A und trägt ein Antriebswellenzahnrad 12. In Figur 1a ist das Antriebswellenzahnrad 12 ohne seine Außenzähnung gezeigt, in Figur 1b ist diese zu sehen.

Die Antriebswelle 10 ist ausgebildet, um an einem Wellenstutzen 11 mit einem Motor des Schiffs verbunden zu werden.

Koaxial zur Antriebswelle 12 verläuft eine erste Ritzelwede 14, die sich damit ebenfalls entlang der Antriebswellenachse A erstreckt. Auf die erste Ritzelwelle 14 ist ein erstes Ritzel 16 ausgebildet Beispielsweise ist das erste Ritzel 16 ein einstückiger Bestandteil der ersten Ritzelwelle 14.

In Einbaulage schräg unterhalb der ersten Ritzelwelle 14 ist eine Zwischenwelle 18 angeordnet, auf der ein Stirnrad 20 angeordnet ist. Beispielsweise ist das Stirnrad 20 als einstückiger Bestandteil der Zwischenwelle 18 ausgebildet. Die Zwischenwelle 18 umfasst zudem ein Kegelritzel 22, dessen Verzahnung, ebenso wie eine Verzahnung des Stirnrades 20, nicht in Figur 1a, wohl aber in Figur 1b eingezeichnet ist. Auch das Kegelritzel 22 kann als einstückiger Bestandteil der Zwischenwelle 18 ausgebildet sein. Die Zwischenwelle 18 erstreckt sich entlang einer Zwischenwellenachse Z, die parallel zu der Antriebswellenachse A verläuft und von dieser einen vertikalen Achsversatz V hat. Zwischen der ersten Ritzelwelle 14 und der zweiten Ritzelwelle 24 besteht ein vorzugsweise horizontaler Achsversatz H.

In Einbaulage vorzugsweise auf gleicher Höhe ist neben der Antriebswelle 10 und der ersten Ritzelwelle 14 eine zweite Ritzelwelle 24 angeordnet, die sich entlang einer Zweitritzelwellenachse parallel zur Antriebswellenachse A erstreckt. Auf der zweiten Ritzelwelle 24 ist ein zweites Ritzel 26 angeordnet, das als einstückiger Bestandteil der zweiten Ritzelwelle 24 ausgebildet sein kann und in Figur 1a ohne seine Außenverzahnung gezeigt ist.

Das zweite Ritzel 26 kämmt ebenso wie das erste Ritzel 16 stets mit dem Stirnrad. Benachbart zum Antriebswellenzahnrad 12 ist auf der zweiten Ritzelwelle 24 ein Ritzelwellenzahnrad 28 angeordnet, das in der Ausführungsform gemäß Figur 1 als außenverzahntes Gehäuse einer weiter unten beschriebenen Lamellenkupplung ausgebildet ist.

In Einbaulage befindet sich unterhalb der Zwischenwellenachse Zeine Abtriebswelle 30, die sich entlang einer Abtriebswellenachse P erstreckt Die Abtriebswellenachse P verläuft im Wesentlichen senkrecht zu der Zwischenwellenachse Z, d. h. dass ein Abtriebswellenachsenwinkel a im Wesentlichen 90° beträgt, und beispielsweise zwischen 85 und 95° liegt. Damit verläuft die Abtriebswellenachse P in Einbaulage im Wesentlichen vertikal.

Auf der Abtriebswelle 30 ist ein Tellerrad 31 angeordnet, das einen einstückigen Bestandteil der Abtriebswelle 30 darstellen kann. Alternativ ist das Tellerrad 31 über eine Wellen-Nabe-Verbindung mit der Abtriebswelle 30 befestigt. Das Tellerrad 31 ist in Figur 1a ohne und in Figur 1b mit seiner Verzahnung gezeigt und kämmt stets mit dem Kegelritzel 22. Das Kegelritzel 22 und das Tellerrad 31 bilden so einen Kegeltrieb.

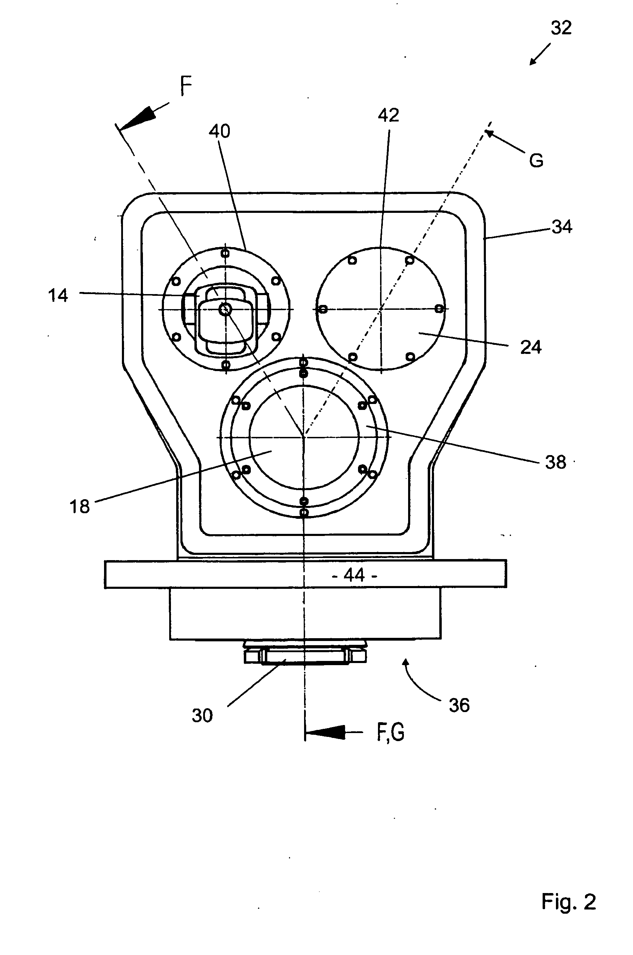

Figur 2 zeigt das Schiffsgetriebe 32 mit einem Gehäuse 34, in dem die Komponenten gemäß der Figuren 1a und 1b angeordnet sind. An einer Unterseite 36 verlässt die Abtriebswelle 30 das Gehäuse 34. Die Zwischenwelle 18 ist in Zwischenwellenlagern 38, die erste Ritzelwelle 14 in Erstritzelwellenlagern 40 und die zweite Ritzelwelle 24 in Zweitritzelwellenlagern 42 gelagert, wobei in Figur 2 jeweils Verschlussdeckel der einzelnen Lager zu sehen sind.

Das Gehäuse 34 umfasst einen Getriebefuß 44, der in Einbaulage des Gehäuses 34 und damit des Schiffsgetriebes 32 im Wesentlichen horizontal verläuft und zum Montieren des Schiffsgetriebes 32 in einem Schiff, beispielsweise einer Yacht, ausgebildet ist.

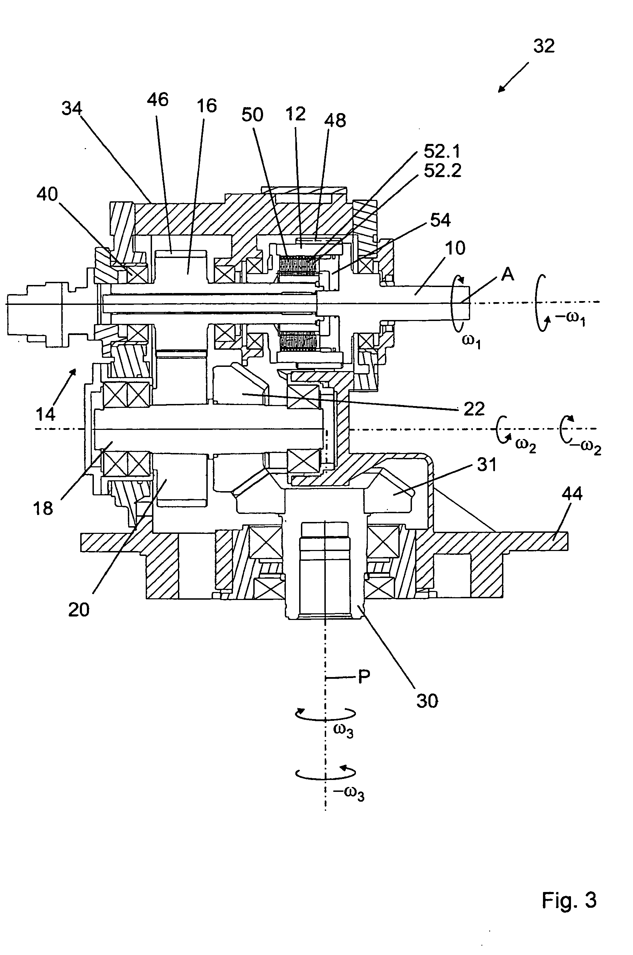

Figur 3 zeigt einen Schnitt entlang der Linie F-F gemäß Figur 2. In Figur 3 ist eine Außenverzahnung 46 des ersten Ritzels 16 zu erkennen, die mit einer Außenverzahnung des Stirnrades 20 kämmt. Es ist zudem zu erkennen, dass das Antriebswellenzahnrad 12 durch ein Kupplungsgehäuse mit einer Außenverzahnung 48 gebildet ist, das eine Antriebswellenkupplung 50 umschließt.

Die Antriebswellenkupplung 50 ist eine hydraulische Lamellenkupplung und umfasst eine Vielzahl an ersten Lamellen 52.1, die drehfest mit dem Antriebswellenzahnrad 12 und damit mit der Antriebswelle 10 verbunden sind und zweiten Lamellen 52.2, die mit der ersten Ritzelwelle 14 drehstarr verbunden sind. Die Lamellen 52.1, 52.2 können über einen Hydraulikzylinder 54 miteinander in Reibkontakt gebracht werden, so dass die Antriebswelle 10 mit der ersten Ritzelwelle 14 verkuppelt ist. In der in Figur 3 gezeigten Situation drückt der Hydraulikzylinder 54 die ersten Lamellen 52.1 und die zweiten Lamellen 52.2 nicht zusammen, so dass die erste Ritzelwelle 14 von der Antriebswelle 10 entkoppelt ist.

Dreht beispielsweise die Antriebswelle 10 mit einer Drehgeschwindigkeit ω₁ (vgl. Figur 1a) um die Antriebswellenachse A und ist die Antriebswellenkupplung 50 geschlossen, so rotiert auch die erste Ritzelwelle 14 mit der Drehgeschwindigkeit ω₁. Dadurch dreht sich die Zwischenwelle 18 mit einer Drehgeschwindigkeit ω₂, die kleiner ist als die Drehgeschwindigkeit ω₁. Die Übersetzung ω₁/ω₂ beträgt beispielsweise 1,5 bis 2,5, insbesondere 2. Daraus folgt, dass das erste Ritzel 16 halb so viele Zähne besitzt wie das Stirnrad 20.

Das Kegelrad 22 überträgt die Drehbewegung auf das Tellerrad 31, so dass sich die Abtriebswelle 30 mit einer Drehgeschwindigkeit ω₃ dreht. In Figur 1b sind die in Figur 1a weggelassenen Zähnungen von Kegelritzel 22 und Tellerrad 31 zu sehen.

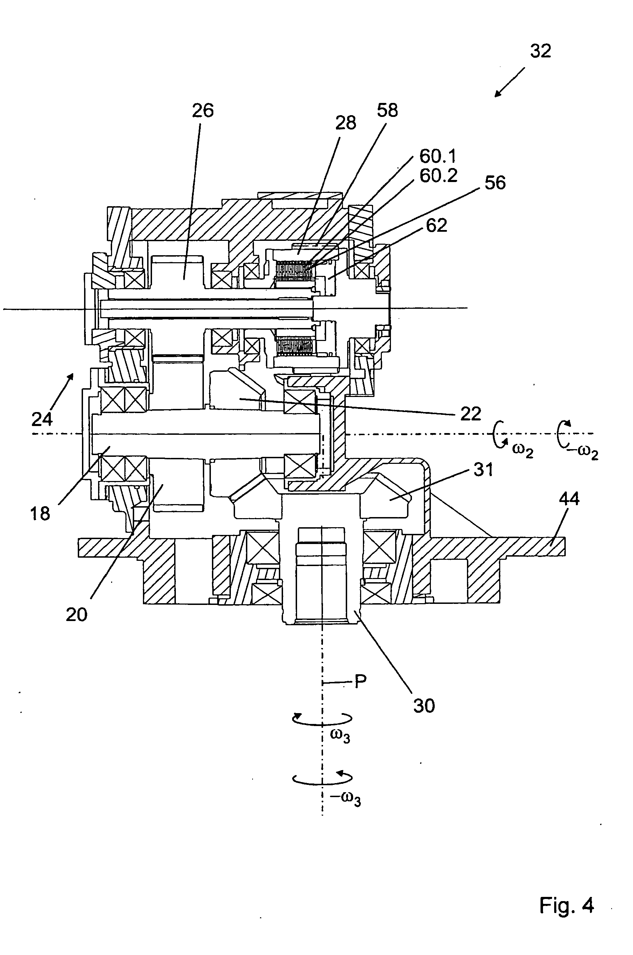

Figur 4 zeigt einen Schnitt gemäß G-G gemäß Figur 2. Es ist zu erkennen, dass die zweite Ritzelwelle 24 über eine Ritzelkupplung 56 mit dem Ritzelwellenzahnrad 28 verbindbar ist, wobei das Ritzelwellenzahnrad 28 durch ein Gehäuse mit einer Außenverzahnung 58 gebildet ist, das die Ritzelwellenkupplung 56 beherbergt. Die Ritzelwellenkupplung 56 ist wie die Antriebswellenkupplung aufgebaut und umfasst erste Lamellen 60.1, die mit dem Ritzelwellenzahnrad 28 verbunden sind, und zweite Lamellen 60.2, die mit der zweiten Ritzelwelle 24 verbunden sind. Über einen zweiten Hydraulikzylinder 62 können die ersten Lamellen 60.1 und die zweiten Lamellen 60.2 so in Kontakt gebracht werden, dass das Ritzelwellenzahnrad 28 mit der zweiten Ritzelwelle drehfest verbunden ist.

Wenn, wie oben im Zusammenhang mit Figur 3 beschrieben, die Antdebswellenkupplung 50 geschlossen ist, rotieren die Antriebswelle 10 und die erste Ritzelwelle 14 mit der Drehgeschwindigkeit ω₁ (siehe Figur 1a) und das Stirnrad 20 treibt das zweite Ritzel 26 an, das sich daraufhin ebenfalls mit der Drehgeschwindigkeit ω₁ in die gleiche Richtung dreht wie das erste Ritzel 16, da beide Ritzel 16, 26 gleich aufgebaut sind. Das Ritzelwellenzahnrad 28 kämmt mit dem Antriebswellenzahnrad 12, so dass es sich mit der Drehgeschwindigkeit -ω₁ dreht. Die Ritzelwellenkupplung 56 ist geöffnet, so dass das Ritzelwellenzahnrad 28 und das zweite Ritzel 26 gegenläufig rotieren können.

Um diesen Zustand einzustellen, steuert eine nicht eingezeichnete elektrische und/oder pneumatische Ansteuereinheit, die Steuer- und/oder Regelfunktion haben kann, den ersten Hydraulikzylinder 54 (Figur 3) so an, dass er die Antriebswellenkupplung 50 schließt. Gleichzeitig steuert die Ansteuereinheit den zweiten Hydraulikzylinder 62 so an, dass er die Ritzelwellenkupplung 56 öffnet.

Um in einen Leerlauf zu schalten, steuert die Ansteuereinheit beide Hydraulikzylinder 54 (Figur 3) und 62 (Figur 4) so an, dass die jeweiligen hydraulischen Lamellenkupplungen geöffnet sind. Es dreht sich dann keine der Wellen, mit Ausnahme der Antriebswelle 10.

Um die Drehrichtung der Abtriebswelle 30 umzukehren, steuert die Ansteuereinheit ersten Hydraulikzylinder 54 so an, dass die Antriebswellenkupplung 50 geöffnet wird. Das Abtriebswellenzahnrad 12 (Figur 1a) dreht dann weiterhin mit der Drehgeschwindigkeit ω₁. Die Ansteuereinheit steuert zudem den zweiten Hydraulikzylinder 62 (Figur 4) so an, dass das Ritzelwellenzahnrad 28 mit der zweiten Ritzelwelle 24 drehfest verbunden ist. Dadurch dreht sich das zweite Ritzel 26 nunmehr mit der Drehgeschwindigkeit -ω₁. Folglich dreht auch das Stirnrad 20 mit der Drehgeschwindigkeit -ω₂, so dass das Tellerrad 31 und damit die Abtriebswelle 30 mit der Drehgeschwindigkeit -ω₃ drehen.

In einem Schiff eingebaut, ist die Abtriebswelle 30 mit mindestens einem Propeller eines Pod-Antriebs verbunden. Durch das beschriebene Umkuppeln wird eine Schubumkehr des Propellers erreicht. Ein erfindungsgemäßes Schiff umfasst ein Schiffsgetriebe 32, das beispielsweise so eingebaut ist, dass die Antriebswellenachse A und damit auch die Zwischenwellenachse Z im Wesentlichen horizontal verlaufen. Die Abtriebswelle 30 verläuft dann im Wesentlichen vertikal zu einer Gondel. In der Gondel ist ein Umlenkgetriebe vorhanden, das mindestens einen Propeller um eine Propellerachse antreibt, die im Wesentlichen parallel zu der Antriebswellenachse A verläuft oder mit dieser einen Winkel von wenigen Grad, beispielsweise weniger als 15°, bildet.

### Bezugszeichenliste

- 10: Antriebswelle
- 12: Antriebswellenzahnrad
- 14: erste Ritzelwelle
- 16: erstes Ritzel
- 18: Zwischenwelle

- 20: Stirnrad
- 22: Kegelritzel
- 24: zweite Ritzelwelle
- 26: zweites Ritzel
- 28: Ritzelwellenzahnrad

- 30: Abtriebswelle
- 31: Tellerrad
- 32: Schiffsgetriebe
- 34: Gehäuse
- 36: Unterseite
- 38: Zwischenwellenlager

- 40: Erstritzelwellenlager
- 42: Zweitritzelwellenlager
- 44: Getriebefuß
- 46: Außenverzahnung
- 48: Außenverzahnung

- 50: Antriebswellenkupplung
- 52: Lamellen
- 54: Hydraulikzylinder
- 56: Ritzelwellenkupplung
- 58: Außenverzahnung

- 60: Lamellen
- 62: Hydraulikzylinder

- A: Antriebswellenachse
- Z: Zwischenwellenachse
- H: horizontaler Achsversatz
- V: vertikaler Achsversatz
- P: Abtriebswellenachse
- α: Abtriebswellenachsenwinkel
- ω_{1,2,3}: Drehgeschwindigkeit

## Patentansprüche

1. Schiffsgetriebe mit
(a) einer Antriebswelle (10),
- die sich entlang einer Antriebswellenachse (A) erstreckt und
- auf der ein Antriebswellenzahnrad (12) angeordnet ist,
(b) einer ersten Ritzelwelle (14),
- die sich koaxial zur Antriebswelle (10) erstreckt und
- auf der ein erstes Ritzel (16) angeordnet ist,
(c) einer zweiten Ritzelwelle (24),
(i) die sich parallel zur Antriebswelle (10) erstreckt und
(ii) auf der ein Ritzelwellenzahnrad (28), das mit dem Antriebswellenzahnrad (12) kämmt, und
(iii) ein zweites Ritzel (26) angeordnet sind,
(d) einer Zwischenwelle (18), auf der
- ein Stirnrad (20), das mit dem ersten Ritzel (16) und dem zweiten Ritzel (26) kämmt, und
- ein Kegelritzel (22) angeordnet sind, und
(e) einer Abtriebswelle (30),
- die sich entlang einer Abtriebswellenachse (P) erstreckt, die unter einem Winkel (α von mehr als 75° zur Antriebswellenachse (A) verläuft und
- auf der ein Tellerrad (31) angeordnet ist, das mit dem Kegelritzel (22) einen Kegeltrieb bildet
**dadurch gekennzeichnet, dass**
(f) auf der Antriebswelle (10) eine schaltbare Antriebswellenkupplung (50) angeordnet ist, mittels der das Antriebswellenzahnrad (12) drehfest mit der ersten Ritzelwelle (14) verbindbar ist.

2. Schiffsgetriebe nach Anspruch 1, **dadurch gekennzeichnet, dass**
- die Antriebswelle einen Wellenstutzen (11) zum Verbinden mit einem Motor aufweist und
- das Tellerrad (31) bezüglich einer Ebene durch das erste Ritzel (16), das zweite Ritzel (26) und das Stirnrad auf der gleichen Seite angeordnet ist wie der Wellenstutzen (11).

3. Schiffsgetriebe nach Anspruch 1, **dadurch gekennzeichnet, dass** das Antriebswellenzahnrad (12) als außenverzahntes Gehäuse der Lamellenkupplung ausgebildet ist.

4. Schiffsgetriebe nach einem der vorstehenden Ansprüche, **dadurch gekennzeichnet, dass** auf der zweiten Ritzelwelle (24) eine schaltbare Ritzelwellenkupplung (56) angeordnet ist, mittels der das Ritzelwellenzahnrad (28) drehfest mit der zweiten Ritzelwelle (24) verbindbar ist.

5. Schiffsgetriebe nach Anspruch 4, **dadurch gekennzeichnet, dass** die schaltbare Ritzelwellenkupplung (56) eine hydraulisch schaltbare Lamellenkupplung ist.

6. Schiffsgetriebe nach Anspruch 4 oder 5, **dadurch gekennzeichnet, dass** das Ritzelwellenzahnrad (28) als außenverzahntes Gehäuse der Ritzelwellenkupplung (56) ausgebildet ist.

7. Schiffsgetriebe nach einem der Ansprüche 4 bis 6, **gekennzeichnet durch** eine elektrische Ansteuereinheit, die ausgebildet ist, um die Antriebswellenkupplung (50) und die Ritzelwellenkupplung (56) so zu schalten, dass stets höchstens eine der beiden eine drehfeste Verbindung herstellt.

8. Schiffsgetriebe nach einem der vorstehenden Ansprüche, **gekennzeichnet durch** einen Drehmomentabzweigzapfen zum Abgreifen eines Drehmoments an einer von der Abtriebswelle (30) verschiedenen Stelle.

9. Schiffsgetriebe nach einem der vorstehenden Ansprüche, **gekennzeichnet durch** einen Drehmomenteinleitzapfen zum Einleiten eines Antriebsdrehmoments.

10. Schiffsgetriebe nach einem der vorstehenden Ansprüche, **dadurch gekennzeichnet, dass** die Antriebswellenachse (A) in Einbaulage des Schiffsgetriebes im Wesentlichen horizontal verläuft.

11. Schiffsgetriebe nach einem der vorstehenden Ansprüche, **dadurch gekennzeichnet, dass** es ausgebildet ist zum dauerhaften Übertragen einer mechanischen Leistung von mehr als 430 kW, insbesondere von mehr als 1300 kW.

12. Schiff, insbesondere Yacht, mit
(a) mindestens einem Motor,
(b) einem Schiffsgetriebe (32) nach einem der vorstehenden Ansprüche, das mit dem Motor verbunden ist, und
(c) einer Propellergondel, die mindestens einen Propeller umfasst, der mit dem Schiffsgetriebe verbunden ist.

13. Schiff nach Anspruch 12, **dadurch gekennzeichnet, dass** der Propeller eine Propellerachse besitzt, die mit der Antriebswellenachse (A) einen Winkel von weniger als 10° einschließt.

14. Schiff nach Anspruch 12 oder 13, **gekennzeichnet durch** einen Elektromotor, der mit einem Drehmomenteinleitzapfen des Schiffsgetriebes verbunden ist.

## Claims

1. A marine-vessel transmission having
(a) an input-drive shaft (10),
- which extends along an input-drive shaft axis (A) and
- on which an input-drive shaft gearwheel (12) is arranged,
(b) a first pinion shaft (14),
- which extends coaxially with respect to the input-drive shaft (10) and
- on which a first pinion (16) is arranged,
(c) a second pinion shaft (24),
- which extends parallel to the input-drive shaft (10) and
- on which a pinion shaft gearwheel (28), which engages with the input-drive shaft gearwheel (12), and
- a second pinion (26) are arranged,
(d) an intermediate shaft (18), on which
- a spur gear (20), which engages with the first pinion (16) and the second pinion (26), and
- a bevel pinion (22) are arranged, and
(e) an output-drive shaft (30),
- which extends along an output-drive shaft axis (P) which runs at an angle (α of more than 75° with respect to the input-drive shaft axis (A), and
- on which a spur bevel gear (31) is arranged, which forms a bevel drive with the bevel pinion (22)
**characterized in that**
(f) a switchable input-drive shaft clutch (50) is arranged on the input-drive shaft (10), by means of which the input-drive shaft gearwheel (12) can be connected to the first pinion shaft (14) such that they rotate together.

2. The marine-vessel transmission as claimed in claim 1, wherein
- the input-drive shaft has a shaft stub (11) for connection to an engine, and
- the spur bevel gear (31) is arranged on the same side as the shaft stub (11) with respect to a plane through the first pinion (16), the second pinion (26) and the spur gear.

3. The marine-vessel transmission as claimed in claim 1, wherein the input-drive shaft gearwheel (12) is in the form of a housing, which has an external tooth system, of the disk clutch.

4. The marine-vessel transmission as claimed in one of the preceding claims, wherein a switchable pinion shaft clutch (56) is arranged on the second pinion shaft (24), by means of which the pinion shaft gearwheel (28) can be connected to the second pinion shaft (24) such that they rotate together.

5. The marine-vessel transmission as claimed in claim 4, wherein the switchable pinion shaft clutch (26) is a hydraulically switchable disk clutch.

6. The marine-vessel transmission as claimed in claim 4 or 5, wherein the pinion shaft gearwheel (28) is in the form of a housing, with an external tooth system, of the pinion shaft clutch (56).

7. The marine-vessel transmission as claimed in one of claims 4 to 6, comprising an electrical drive unit which is designed in order to switch the input-drive shaft clutch (50) and the pinion shaft clutch (56) such that at most one of the two always produces a connection such that they rotate together.

8. The marine-vessel transmission as claimed in one of the preceding claims, comprising a torque tapoff journal for tapping off a torque at a point which is not the same as the output-drive shaft (30).

9. The marine-vessel transmission as claimed in one of the preceding claims, comprising a torque introduction journal for introduction of an input-drive torque.

10. The marine-vessel transmission as claimed in one of the preceding claims, wherein the input-drive shaft axis (A) runs essentially horizontally when the marine-vessel transmission is in the installed position.

11. The marine-vessel transmission as claimed in one of the preceding claims, wherein the marine-vessel transmission is designed to continuously transmit a mechanical power of more than 430 kW, in particular of more than 1300 kW.

12. A marine vessel, in particular a yacht, having
(a) at least one engine,
(b) a marine-vessel transmission (32) as claimed in one of the preceding claims, which is connected to the engine, and
(c) a propeller pod, which comprises at least one propeller which is connected to the marine-vessel transmission.

13. The marine vessel as claimed in claim 12, wherein the propeller has a propeller axis which includes an angle of less than 10° with the input-drive shaft axis (A).

14. The marine vessel as claimed in claim 12 or 13, comprising an electric engine which is connected to a torque introduction journal of the marine-vessel transmission.

## Revendications

1. Boîte de vitesses pour bateau, comprenant
(a) un arbre d'entraînement (10),
- qui s'étend le long d'un axe (A) d'arbre d'entraînement et
- sur lequel est agencé un engrenage (12) d'arbre d'entraînement,
(b) un premier arbre à pignon (14),
- qui s'étend coaxialement à l'arbre d'entraînement (10), et
- sur lequel est agencé un premier pignon (16),
(c) un second arbre à pignon (24),
(i) qui s'étend parallèlement à l'arbre d'entraînement (10), et sur lequel sont agencés
(ii) un engrenage (28) d'arbre à pignon, qui engrène avec l'engrenage (12) de l'arbre d'entraînement, et
(iii) un second pignon (26),
(d) un arbre intermédiaire (18), sur lequel sont agencés
- un engrenage droit (20), qui engrène avec le premier pignon (16) et avec le second pignon (26), et
- un pignon conique (22), et
(e) un arbre de sortie (30),
- qui s'étend le long d'un axe (P) d'arbre de sortie, qui est disposé sous un angle (a) de plus de 75° par rapport à l'axe (A) d'arbre d'entraînement, et
- sur lequel est agencée une couronne conique (31) qui forme un renvoi d'angle avec le pignon conique (22),
**caractérisée en ce que**
(f) sur l'arbre d'entraînement (10) est agencé un embrayage commutable (50) d'arbre d'entraînement, au moyen duquel l'engrenage (12) d'arbre d'entraînement peut être relié solidairement en rotation avec le premier arbre à pignon (14).

2. Boîte de vitesses pour bateau selon la revendication 1, **caractérisée en ce que**
- l'arbre d'entraînement comprend un moignon d'arbre (11) pour la liaison avec un moteur, et
- la couronne conique (31) est agencée, par rapport à un plan qui est traverse le premier pignon (16), le second pignon (16) et l'engrenage droit, du même côté que le moignon d'arbre (11).

3. Boîte de vitesses pour bateaux selon la revendication 1, **caractérisée en ce que** l'engrenage (12) d'arbre d'entraînement est réalisé sous la forme d'un boîtier à denture extérieure pour l'embrayage à lamelles.

4. Boîte de vitesses pour bateau selon la revendication 1, **caractérisée en ce que** sur le second arbre à pignon (24) est agencé un embrayage commutable (56) d'arbre à pignon, au moyen duquel l'engrenage (28) d'arbre à pignon peut être relié solidairement en rotation avec le second arbre à pignon (24).

5. Boîte de vitesses pour bateau selon la revendication 4, **caractérisée en ce que** l'embrayage commutable (56) d'arbre à pignon est un embrayage à lamelles à commutation hydraulique.

6. Boîte de vitesses pour bateau selon la revendication 4 ou 5, **caractérisée en ce que** l'engrenage (28) d'arbre à pignon est réalisé sous la forme d'un boîtier à denture extérieure pour l'embrayage d'arbre à pignon (56).

7. Boîte de vitesses pour bateau selon l'une des revendications 4 à 6, **caractérisée par** une unité de pilotage électrique, qui est réalisée pour commuter l'embrayage d'arbre d'entraînement (50) et l'embrayage d'arbres à pignon (56) de telle manière qu'en toutes circonstances au maximum l'un des deux établit une liaison solidaire en rotation.

8. Boîte de vitesses pour bateau selon l'une des revendications précédentes, **caractérisée par** un tourillon de dérivation de couple pour prélever un couple de rotation à un emplacement différent de l'arbre de sortie (30).

9. Boîte de vitesses pour bateau selon l'une des revendications précédentes, **caractérisée par** un tourillon de dérivation de couple pour injecter un couple d'entraînement.

10. Boîte de vitesses pour bateau selon l'une des revendications précédentes, **caractérisée en ce que** l'axe (A) d'arbre d'entraînement s'étend sensiblement horizontalement dans la situation de montage de la boîte de vitesses pour bateau.

11. Boîte de vitesses pour bateau selon l'une des revendications précédentes, **caractérisée en ce qu'**elle est réalisée pour la transmission durable d'une puissance mécanique de plus de 430 kW, en particulier de plus de 1300 kW.

12. Bateau, en particulier yacht, comprenant
(a) au moins un moteur,
(b) une boîte de vitesses pour bateau (32) selon l'une des revendications précédentes, qui est reliée au moteur, et
(c) une nacelle à hélice, qui comprend au moins une hélice qui est reliée à la boîte de vitesses pour bateau.

13. Bateau selon la revendication 12, **caractérisé en ce que** l'hélice possède un axe d'hélice qui forme avec l'axe (A) d'arbre d'entraînement un angle inférieur à 10°.

14. Bateau selon la revendication 12 ou 13, **caractérisé par** un moteur électrique, qui est relié à un tourillon d'injection de couple de rotation de la boîte de vitesses.
